# EUROPEAN PATENT APPLICATION

(11) **EP 0 716 867 A1**
(43) Date of publication of application: **19.06.1996**
(21) Application number: 94917162.3
(22) Date of filing: 06.06.1994
(51) Int. Cl.: B01D 3/10, B01D 3/00

(54) **METHOD OF AND APPARATUS FOR DISTILLATION UNDER REDUCED PRESSURE**

(30) Priority: 30.08.1993 JP 235837/93; 31.08.1993 JP 237183/93; 07.09.1993 JP 246214/93; 07.09.1993 JP 246215/93; 08.09.1993 JP 246066/93
(71) Applicant: KABUSHIKI KAISHA TOSHIBA, Kawasaki-shi, Kanagawa-ken 210 (JP)
(72) Inventor: KAWAGOE, Shunichi, Shizuoka 410-24 (JP); TSUCHIYA, Takeji, Shizuoka 410-22 (JP); OHKAWA, Takayuki, Shizuoka 410-32 (JP); SAITO, Toshio, Shizuoka 411 (JP)
(74) Representative: Waldren, Robin Michael
(86) International application number: JP9400913
(87) International publication number: WO9506504

(57) **Abstract**

A liquid under treatment such as, for example, a nonaqueous solvent containing soil components is heated and vaporized under a reduced pressure in a still 1 possessed of a heating mechanism 4 using a heat-resistant oil as a heating medium. The produced vapor of the nonaqueous solvent is liquefied by condensation in a condenser 19. The distillate resulting from the liquefaction by condensation is circulated through a water separator 31. The interior of the still 1 is vacuumized to a prescribed condition of reduced pressure by an ejector 34 inserted in a circulation system for the distillate. The residue of distillation remaining in the still 1 is discharged into a liquid storage tank 22 connected to the still 1 through the medium of a waste liquid pipe 21 having a switch valve 53 inserted therein and also connected thereto through the medium of a communicating tube 54 so as to be adjusted to the same degree of reduced pressure as in the still 1 and cooled therein by a cooling device 48. Thus, the liquid under treatment such as, for example, the nonaqueous solvent containing various soil components can be regenerated with high efficiency.

## Description

### Technical Field:

This invention relates to a method for reduced-pressure distillation and an apparatus for reduced-pressure distillation which are suited to the regeneration of a liquid for treatment containing a soil component of varying sort like an oily soil component or a solid soil component, and more particularly to a method for reduced-pressure distillation and an apparatus for reduced-pressure distillation which are suited to the regeneration such as of a nonaqueous solvent containing a soil component of varying sort.

### Background Art:

Various parts such as metal parts, plated parts, coated parts, electronic parts, and semiconductor parts are smeared with various soil components represented typically by cutting oils and other similar machining oils and greases, fluxes, and dust while they are in the process of manufacture, assembly, and the like. Heretofore, it has been customary to clean such various smeared parts with halogenated hydrocarbon solvents which are represented by CFC. As evinced by the enactment of such legal regulations as the regulations concerning the prevention of the intoxication caused by organic solvents, however, the halogenated hydrocarbon solvents have been long known to exert adverse effects on human bodies as by inducing hepatic disorders and cancerous diseases. In addition to these adverse effects on human bodies, such detrimental effects of the solvents on the environment as, for example, the pollution of the groundwater and the depletion of the ozonosphere have come to demand an attentive public consideration. A cleaning solvent which can take the place of a halogenated hydrocarbon solvent and will avoid adversely affecting human bodies and the environment, therefore, is now yearned for.

As potential alternatives for the halogenated hydrocarbon solvents, various nonaqueous solvents such as silicone solvents, hydrocarbon solvents, perfluorocarbon solvents, and terpene solvents have been proposed. The viability of the methods of cleaning by the use of these alternative solvents is being studied. For the sake of realizing a cleaning process using such a nonaqueous solvent, it is important that a method be established for the regeneration of the used solvent. When machine parts, electronic parts, etc. are cleaned with a nonaqueous solvent, a varying soil component adhering to the parts being cleaned depart from the parts and mingle in the nonaqueous solvent. The soil component now in the solvent cannot be removed from the solvent by simply passing the dirty solvent through a filter which is provided for the cleaning device. Since the nonaqueous solvents mentioned above are generally expensive and further from the viewpoint of the conservation of natural resources, it is necessary that the nonaqueous solvents be regenerable for the sake of reuse.

The simplest means for treating and regenerating the used nonaqueous solvent include, for example, the so-called simple distillation which consists of heating and condensing a given used nonaqueous solvent. The operation of heating a nonaqueous solvent possessed of flammability to the boiling point of the solvent, however, is extremely dangerous. As a breakthrough, the practicability of the principle of reduced-pressure distillation as a means for implementing the treatment and regeneration of a nonaqueous solvent mentioned above is being studied. The reduced-pressure distillation has a high possibility of lowering the temperature of heating and, at the same time, permitting a solvent of high load and high concentration to be treated with high efficiency. The treatment and regeneration of a nonaqueous solvent by reduced-pressure distillation has found practical utility in applications other than the application contemplated by this invention such as, for example, the regeneration of a dry cleaning grade petroleum solvent which has cleaned clothing or the like.

When commercially produced parts are to be cleaned with such a nonaqueous solvent as mentioned above in the place of a halogenated hydrocarbon solvent, the amount of the nonaqueous solvent to be used for the cleaning is extremely large as compared with that of a dry cleaning grade petroleum solvent. When the nonaqueous solvent is regenerated in such a large amount as mentioned above, the problem arises that the regeneration cannot be effected with high efficiency by the use of the conventional method of reduced-pressure distillation or the conventional apparatus for reduced-pressure distillation.

The conventional method of reduced-pressure distillation and the conventional apparatus for reduced-pressure distillation entail the problem that they will not be able to regenerate very efficiently a relatively large amount of a waste of a nonaqueous solvent that has been used for cleaning. When a nonaqueous solvent is used for cleaning various commercially produced parts, it is important for the purpose of improving the quality of cleaning and promoting a reduction in the cost of cleaning that the used solvent be rendered regenerable with high accuracy and high efficiency.

This invention has been perfected as a result of the discovery of the fact that such problems as remarked above originate in the idle time which is attendant on such supplementary devices as, for example, a vacuum generator and a heating source and the discarding of the residue of distillation, and further in such impurities as, for example, moisture, sulfur, and chloride mixed in the distillation system through the phenomenon of azeotropy.

A primary object of this invention is to provide a method for reduced-pressure distillation and an apparatus for reduced-pressure distillation which allows a liquid under treatment such as, for example, a nonaqueous solvent containing a soil component to be regenerated with high efficiency. To be more specific, this invention aims to provide a method for reduced-pressure distillation and an apparatus for reduced-pressure distillation which, by precluding the possible degradation of the degree of rectification caused by the vacuum generator, allow the liquid under treatment such as a nonaqueous solvent which entrains a soil component to be regenerated efficiently and highly accurately and, at the same time, prevent the quality of cleaning from being degraded by the phenomenon of azeotropy. Another object of this invention is to provide a method for reduced-pressure distillation and an apparatus for reduced-pressure distillation which, by precluding the possible degradation of the degree of rectification caused by the heat source, allow the liquid under treatment such as a nonaqueous solvent which contains a soil component to be regenerated efficiently and highly accurately and, at the same time, permit the cost required for supplementary devices and the trouble incurred in the management of equipment to be lowered. Yet another object of this invention is to provide a method for reduced-pressure distillation and an apparatus for reduced-pressure distillation which, by curtailing the time and labor incurred in the discharge of the residue of distillation, allow the liquid under treatment such as a nonaqueous solvent which contains a soil component to be regenerated efficiently and safely.

### Disclosure of the Invention:

The first method for reduced-pressure distillation according to this invention comprises heating and vaporizing a liquid under treatment under a reduced pressure in a still, liquefying the generated vapor by condensation, and effecting regeneration of the liquid mentioned above, which method is characterized by circulating the distillate resulting from the liquefaction through the medium of a liquid storage tank and, at the same time, reducing the pressure in the still to a prescribed degree by the use of an ejector inserted in the circulation system for the distillate.

The second method for reduced-pressure distillation according to this invention comprises a step for reduced-pressure distillation by heating and vaporizing a liquid under treatment under a reduced pressure in a still, liquefying the produced vapor by condensation and, at the same time, allowing the residue of the heating and vaporization to remain in the still thereby effecting regeneration of the liquid under treatment and a step for discharge of the residue by causing the residue remaining in the still to be discharged into a liquid storage tank adjusted to the same degree of reduced pressure as in the still, wherein the step for reduced-pressure distillation is performed immediately after the step for discharge of the residue.

The third method for reduced-pressure distillation according to this invention comprises heating and vaporizing a liquid under treatment under a reduced pressure in a still, liquefying the produced vapor by condensation, and thereby effecting regeneration of the liquid under treatment, which method is characterized by effecting the heating of the liquid under treatment by the use of a heat-resistant oil as a heating medium.

The method for reduced-pressure distillation according to this invention is suitable for the treatment and regeneration of a nonaqueous solvent containing a soil component by means of reduced-pressure distillation.

The first apparatus for reduced-pressure distillation according to this invention is characterized by comprising a still for heating and vaporizing a liquid under treatment under a reduced pressure, a condenser for liquefying by condensation the produced vapor of the liquid, and an ejector inserted in a circulation system for circulating the distillate resulting from the liquefaction by condensation and adapted to adjust the internal pressure of the still at a prescribed degree of reduced pressure.

More specifically, the first apparatus for reduced-pressure distillation mentioned above comprises a still furnished with a heating mechanism and adapted to heat and vaporize a liquid under treatment under a reduced pressure by means of the heating mechanism, a condenser connected in a communicable manner to the still and adapted to liquefy by condensation the produced vapor of the liquid under treatment, a circulation system for circulating the distillate resulting from the liquefaction by condensation via a water separator, and a vacuum generating means connected in a communicable manner via the condenser to the still and having an ejector inserted in the circulation system for the distillate.

The second apparatus for reduced-pressure distillation according to this invention is characterized by comprising a still for heating and vaporizing a liquid under treatment under a reduced pressure, a condenser for liquefying by condensation the produced vapor of the liquid under treatment, and a liquid storage tank adjusted to the same degree of reduced pressure as in the still and adapted to store the residue arising from the heating and vaporizing of the liquid under treatment and remaining in the still.

More specifically, the second apparatus for reduced-pressure distillation mentioned above comprises a still furnished with a heating mechanism and adapted to heat and vaporize a liquid under treatment under a reduced pressure by means of the heating mechanism, a condenser connected in a communicable manner to the still and adapted to liquefy by condensation the produced vapor of the liquid under treatment, a vacuum generating means connected in a communicable manner to the still via the condenser, and a liquid storage tank connected to the still through the medium of a residue discharge tube having a switching mechanism inserted therein, also connected thereto through the medium of a communicating tube so as to be adjusted to the same degree of reduced pressure as in the still, and adapted to receive into storage the residue resulting from the heating and vaporizing of the liquid under treatment through the medium of the residue discharge tube. The apparatus for reduced-pressure distillation mentioned above is characterized by having the liquid storage tank further provided with a cooling means adapted to cool the residue before the residue is discharged from the liquid storage tank.

The third apparatus for reduced-pressure distillation according to this invention is characterized by comprising a still furnished with a heating mechanism using a heat-resistant oil as a heating medium and adapted to heat and vaporize a liquid under treatment under a reduced pressure by the heating mechanism, a condenser connected in a communicable manner to the still and adapted to liquefy by condensation the vapor of the liquid under treatment, and a vacuum generating means connected in a communicable manner to the still through the medium of the condenser.

The third apparatus for reduced-pressure distillation mentioned above is characterized in that the heating mechanism is provided with a heat-exchange flow path possessed of at least either of a first heat-exchange flow path disposed in the still and a second heat-exchange flow path disposed so as to encircle the periphery of the still, an oil heater for heating the heat-resistant oil, and a circulation pump for circulating the heat-resistant oil heated in the oil heater through the medium of the heat-exchange flow path. Further, the third apparatus for reduced-pressure distillation mentioned above is characterized in that the heating mechanism is provided with a heating tank disposed so as to encircle the periphery of the still and filled with the heat-resistant oil and the heating tank is provided with an oil circulating rectifying plate, an oil passing flow path disposed in the lower part of the oil circulating rectifying plate, and a heater disposed inside the oil circulating rectifying plate and used to heat the heat-resistant oil.

The apparatus for reduced-pressure distillation according to this invention is suited to the reduced-pressure distillation of a nonaqueous solvent containing a soil component as a liquid for treatment.

Heretofore, it has been customary to use vacuum pumps such as gear pumps, reciprocating piston pumps, and rotary pumps for the vacuum generating device in implementing the reduced-pressure distillation. These vacuum pumps are provided with such mechanically moving parts as, for example, a gear, a piston, and a rotor. To these moving parts, the use of such oils as lubricating oils and greases is indispensable. The inventors have found that when a vacuum pump is used in the reduced-pressure distillation, the oil used in the vacuum pump inevitably mingles with the regenerating liquid and consequently lowers the degree of rectification. When the degree of rectification is lowered as described above, the consequence is a drop in the efficiency with which the regeneration of a liquid under treatment is attained because the treatment must be repeated and the apparatus for reduced-pressure distillation must be checked and reconditioned without fail.

Further, the vacuum pump not only calls for irksome maintenance because it is provided with movable parts but also fails to offer fully satisfactory durability because the movable parts wear from a long-time use, degrading in function. Further, the use of the vacuum pump in the apparatus for reduced-pressure distillation makes it necessary to install two interconnected tanks each provided with stop valves one each at the inlet and the outlet thereof, store a regenerating liquid in either of the tanks engaging in the reduced-pressure distillation or assuming the state of a vacuum, then operate the plurality of stop valves several times until the inner pressure of the tank returns to the atmospheric pressure, and thereafter extract the regenerating solvent from the tank. The present inventors have found that these operations not merely cause much trouble but also form a factor for a decline in the efficiency with which the liquid under treatment is regenerated similarly to the decline in the degree of rectification mentioned above.

As the source of heat in the apparatus for reduced-pressure distillation, it has been customary heretofore to use the steam such as is derived from a boiler. The present inventors have found, however, that when a liquid under treatment is heated and vaporized by the use of the steam, the management of the temperature of vaporization or the accurate maintenance of the range of temperature appropriate for the characteristic volatility of the liquid under treatment is extremely difficult to attain and, as a result, the degree of rectification is liable to decrease. Of course, this decline in the degree of rectification attendant on the kind of the source of heat forms a factor for a drop in the efficiency with which the liquid under treatment is regenerated. The apparatus for reduced-pressure distillation, unless it is installed in a plant already provided with a steam line, must be provided anew with a steam generating boiler and, at the same time, a steam line. It has been consequently found that the use of the conventional apparatus for reduced-pressure distillation incurs enormous cost and labor in the inevitable installation of accessorial devices and that the adoption of an apparatus for regeneration using the principle of reduced-pressure distillation entails not a few factors for marring the merits of regeneration.

After the liquid under treatment has undergone distillation under a reduced pressure, the waste liquid (sludge) formed of oil or grease remains as a residue of distillation in the still. Periodically, the waste liquid must be discharged from the still via the bottom part thereof. In this case, for the purpose of preventing a worker engaging in the work of discharging the waste liquid from getting burnt or preventing the still and the devices proximate thereto from catching fire owing to ignition, the residue of distillation must not be discharged until the temperature of the residue of distillation in the still falls to a level approximating normal room temperature. Since the discharge of the residue of distillation results in upsetting the state of reduced pressure inside the still, the internal pressure of the still must be reduced again to the prescribed degree of reduced pressure subsequently to the discharge of the residue of distillation. Owing to these factors, a fair amount of idle time is required to intervene between the completion of the operation of the apparatus and the restart of the operation. The present inventors have found that this very fact constitutes a factor for lowering the efficiency with which the liquid under treatment is treated and regenerated.

The present invention has been perfected on the basis of various pieces of knowledge mentioned above. The first method for reduced-pressure distillation, for example, adjusts the internal pressure of the still to the prescribed degree of reduced pressure by dint of the force of aspiration exerted by an ejector which is inserted in a circulation system through the medium of a liquid storage tank. It, therefore, allows the reduced-pressure distillation to be implemented with high efficiency and high accuracy unlike the method using the conventional vacuum generating apparatus which suffers possible ingress of such extraneous matter as oil to the distillate.

The second method for reduced-pressure distillation allows the residue of distillation to be discharged from the still without upsetting the vacuum system inclusive of the still because this method includes a step of causing the residue of distillation remaining in the still to be discharged into the liquid storage tank having the internal pressure thereof adjusted to the same degree of reduced pressure as in the still. As a result, the time and labor required for the discharge of the residue of distillation can be decreased to a great extent and the reduced-pressure distillation can be effected efficiently and safely.

The third method for reduced-pressure distillation allows the internal temperature of the still to be easily controlled because it uses a heat-resistant oil as the medium for heating the liquid under treatment. As a result, it can preclude the otherwise possible decline of the degree of rectification due to the control of temperature of the source for heating and permit the reduced-pressure distillation to be carried out with high efficiency and high accuracy.

The first apparatus for reduced-pressure distillation adjusts the internal pressure of the still to the prescribed degree of reduced pressure by dint of the force of aspiration exerted by an ejector which is inserted in a circulation system through the medium of a liquid storage tank. It, therefore, allows the reduced-pressure distillation to be implemented with high efficiency and high accuracy unlike the conventional vacuum generating apparatus which suffers possible ingress of such extraneous matter as oil to the distillate. An apparatus for reduced-pressure distillation which embodies the first apparatus to a greater extent additionally incorporates therein a water separator capable of depriving the distillate of the water and other extraneous substances like sulfur and chlorine which have entered into the distillate through the phenomenon of azeotropy, for example, and inserts an ejector in the circulation system through the medium of the water separator so as to utilize the force of aspiration exerted by the ejector for causing the interior of the still to assume the prescribed degree of reduced pressure. As a result, this apparatus is allowed to rely on the water separator to increase further the degree of rectification and preclude the otherwise possible ingress of extraneous substances such as oil to the distillate owing to the fault of a vacuum generating apparatus. The apparatus is enabled by these factors to implement the reduced-pressure distillation with high efficiency and high accuracy.

The second apparatus for reduced-pressure distillation allows the residue of distillation to be discharged from the still without upsetting the vacuum system inclusive of the still because this apparatus causes the residue of distillation remaining in the still to be discharged into the liquid storage tank having the internal pressure thereof adjusted to the same degree of reduced pressure as in the still. As a result, the time and labor required for the discharge of the residue of distillation can be decreased to a great extent and the reduced-pressure distillation can be effected efficiently and safely. An apparatus for reduced-pressure distillation which embodies the second apparatus to a greater extent further comprises a still and a liquid storage tank which is connected to the still through the medium of a residue discharge tube and also connected to the still through the medium of a communicating tube so as to have the internal pressure adjusted to the same degree of reduced pressure as in the still. This apparatus, therefore, allows the residue of distillation to be discharged from the still into the liquid storage tank without upsetting the vacuum system inclusive of the still. As a result, the time and labor required for the discharge of the residue of distillation can be decreased to a great extent and the reduced-pressure distillation can be effected efficiently and safely. By further providing the liquid storage tank with a cooling mechanism, the residue of distillation kept in the liquid storage tank can be cooled and then extracted safely.

The third apparatus for reduced-pressure distillation allows the internal temperature of the still to be easily controlled because it is provided with a heating mechanism which uses a heat-resistant oil as the medium of heating. Further by having a heat-exchange flow path disposed in the still or so disposed as to encircle the still or by causing a heating tank filled with a heat-resistant oil to be so disposed as to encircle the still, this apparatus is allowed to heat the liquid under treatment with high efficiency with the heat-resistant oil having the temperature thereof controlled infallibly. The apparatus, therefore, can further improve the degree of rectification because it allows the liquid under treatment to be heated and vaporized with the temperature thereof accurately controlled within an appropriate range. Thus, it is enabled to implement the reduced-pressure distillation with high efficiency and high accuracy.

### Brief Description of the Drawings:

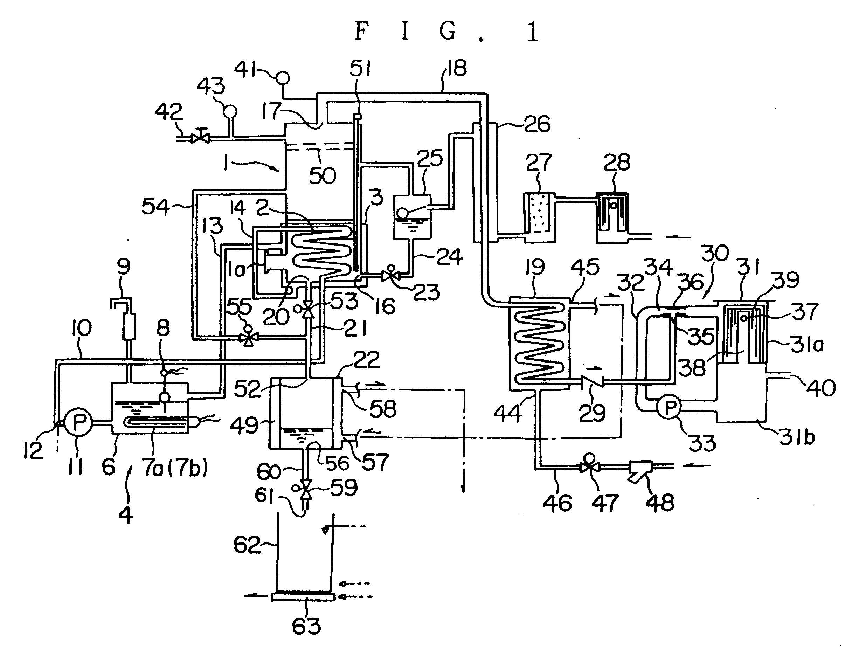

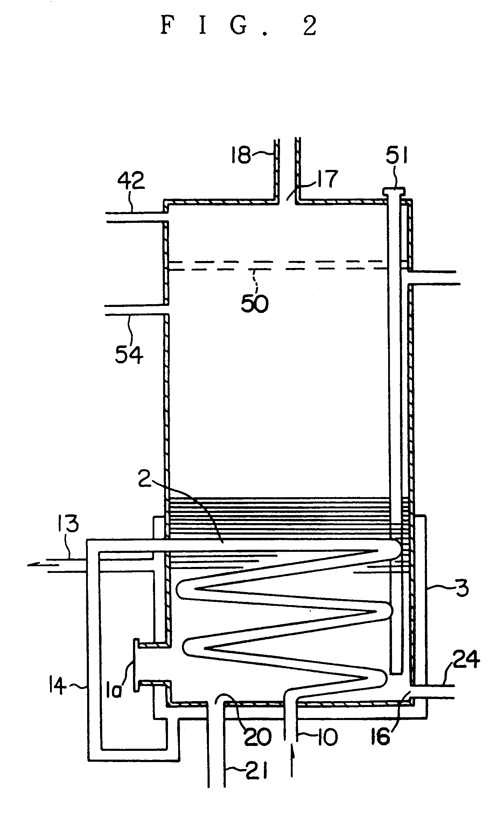

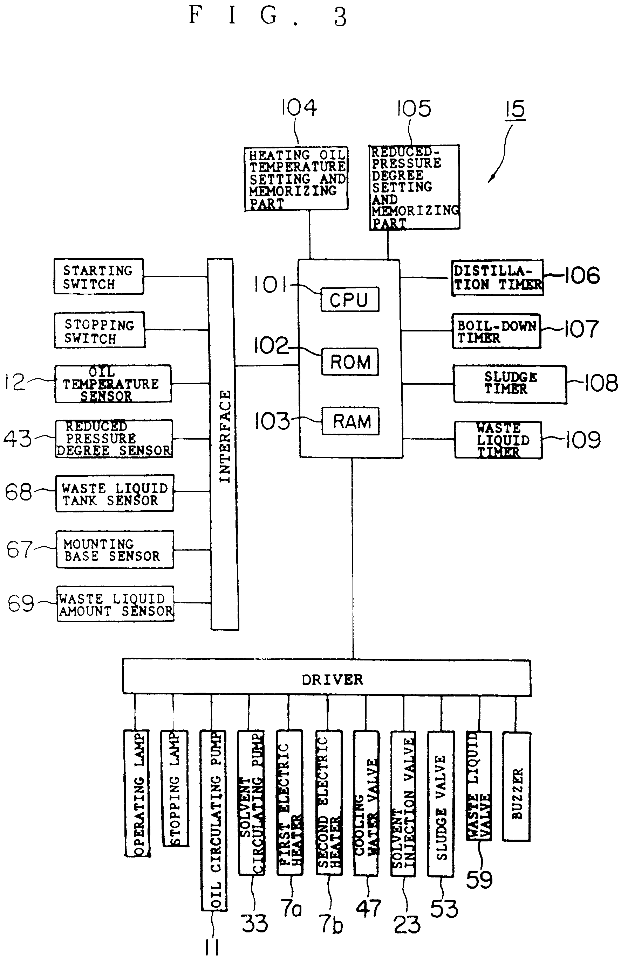

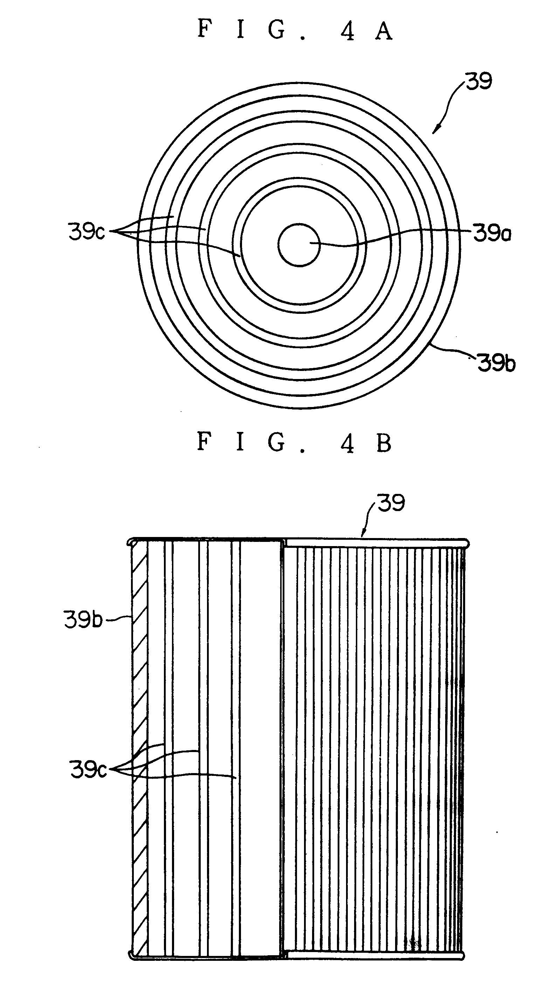

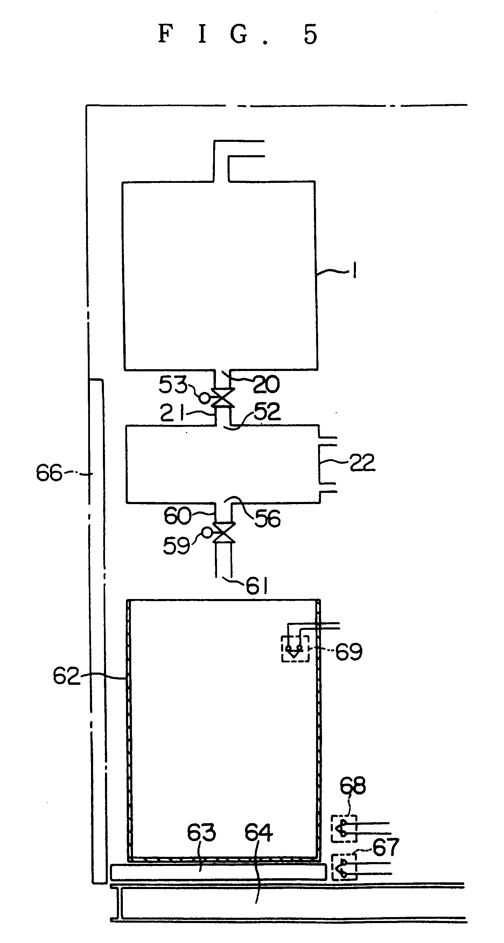

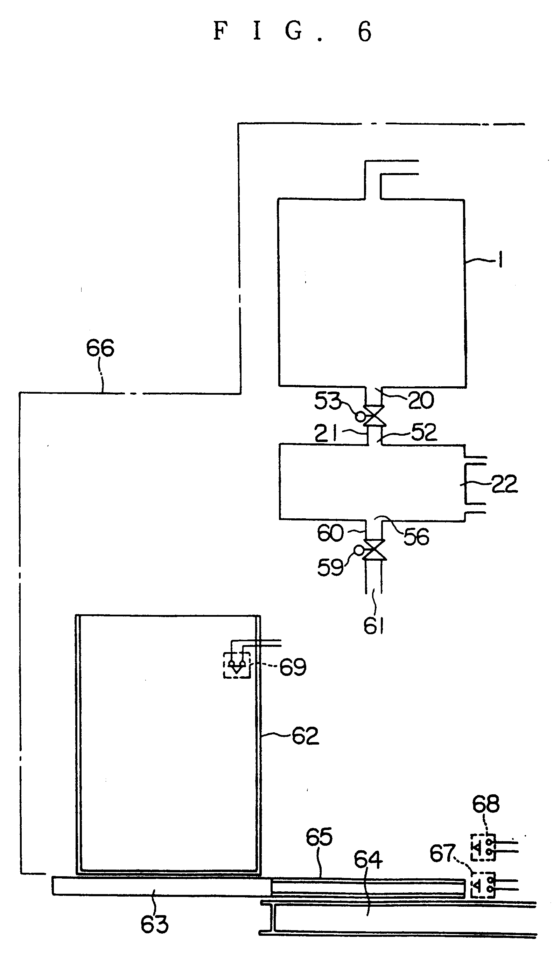

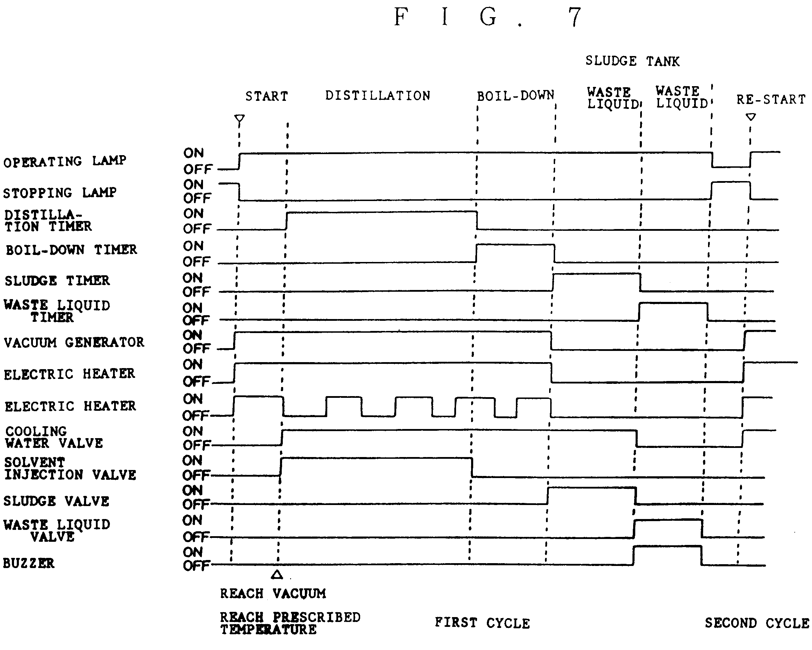

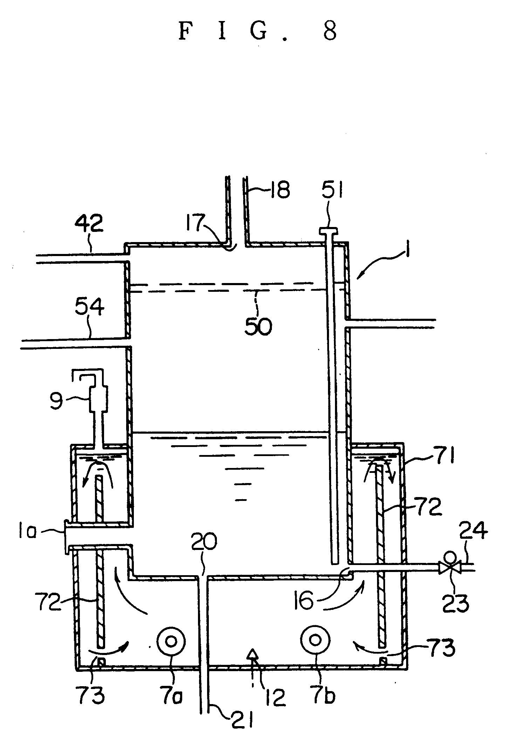

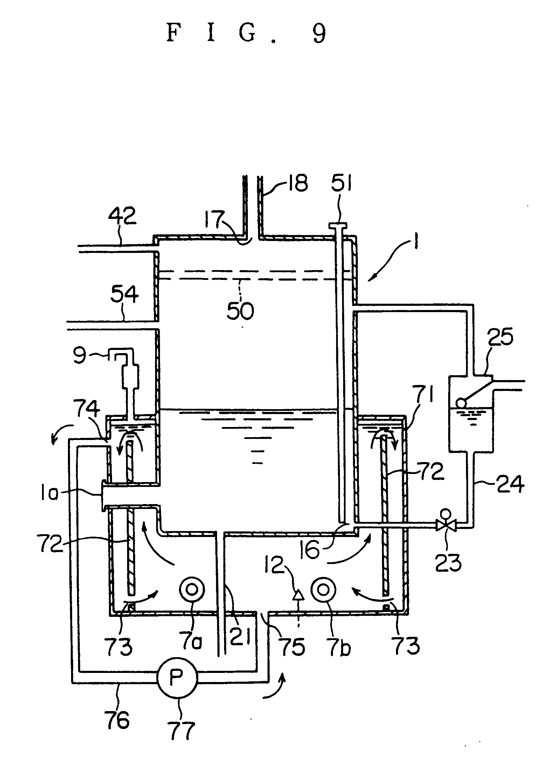

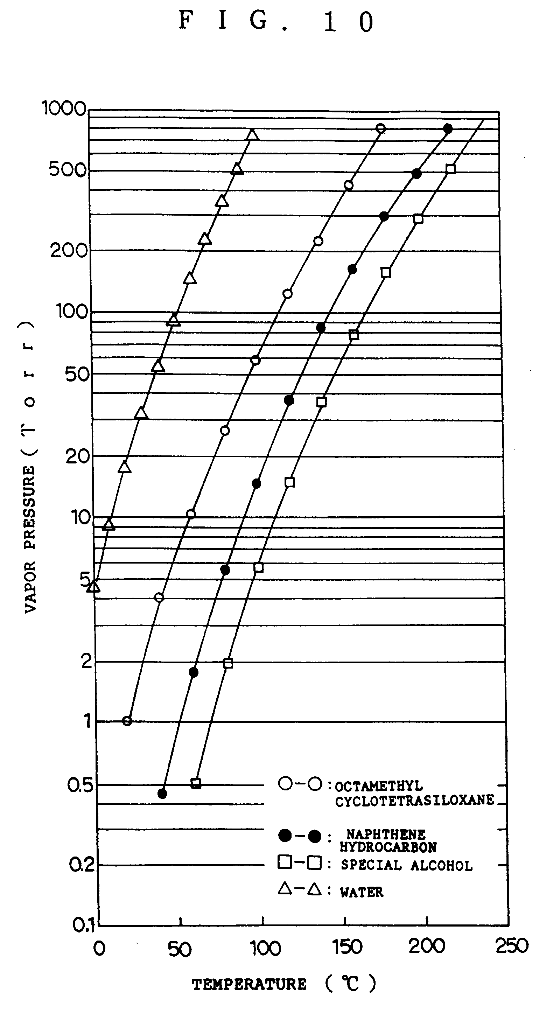

Fig. 1 is a diagram showing the construction of an apparatus for regeneration by reduced-pressure distillation according to one embodiment of this invention. Fig. 2 is a cross section showing on an enlarged scale the part of a still in the apparatus for regeneration by reduced-pressure distillation shown in Fig. 1. Fig. 3 is a schematic block diagram showing an electric control means used in the apparatus for regeneration by reduced-pressure distillation shown in Fig. 1. Fig. 4A is a top view of a filter for a water separator used in the apparatus for regeneration by reduced-pressure distillation shown in Fig. 1. Fig. 4B is a front view showing in a partially cutaway cross section the filter for the water separator. Fig. 5 is a diagram showing the part of a waste liquid tank in the apparatus for regeneration by reduced-pressure distillation shown in Fig. 1. Fig. 6 is a diagram showing the state of motion of the waste liquid tank shown in Fig. 5. Fig. 7 is a diagram showing one example of the timing chart of the operation of the apparatus for regeneration by reduced-pressure distillation shown in Fig. 1. Fig. 8 is a cross section showing the construction of the essential part of an apparatus for regeneration by reduced-pressure distillation according to another embodiment of this invention. Fig. 9 is a cross section showing the construction of the essential part of an apparatus for regeneration by reduced-pressure distillation according to yet another embodiment of this invention. Fig. 10 is a diagram showing one example of the vapor pressure curve of a liquid under treatment.

### Mode for Carrying out the Invention:

Now, the embodiments of this invention will be described below with reference to the drawings annexed hereto.

Fig. 1 is a diagram showing the construction of an apparatus for regeneration by reduced-pressure distillation as one embodiment of this invention. In this diagram, 1 stands for a still proofed against pressure and assuming a generally cylindrical shape. The still 1 is provided, as shown on an enlarged scale in Fig. 2, in the interior thereof with a first coiled or zigzagging heat-exchange flow path 2 and in the exterior thereof with a second jacketed heat-exchange flow path 3 adapted to cover the outside of the bottom of the still 1. The liquid for treatment such as, for example, a nonaqueous solvent containing a soil component (hereinafter referred to as "solvent under treatment") which is supplied to the still 1 is heated under a prescribed degree of reduced pressure by passing a preheated heat-resistant oil as the heating medium through the first and second heat-exchange flow paths 2 and 3.

As a concrete example of the solvent under treatment mentioned above, the nonaqueous solvent which contains such a soil Component as has played the role of a cleaning solvent may be cited. Concrete examples of the cleaning solvent which is subjected to the treatment include, for example, hydrocarbon solvents including silicone solvents and petroleum solvents, perfluorocarbon solvents, terpene solvents, and solvents resulting from the addition thereto of effective cleaning components such as surfactants and alcohols and various additives. The soil components which are removed effectively by reduced-pressure distillation need not be limited particularly. Various soil components including such organic soil components as oil and grease type soil components and such inorganic components as solid soil components can be removed. When the cleaning solvent happens to contain such soil components as a surfactant and an alcohol, these soil components can be as effectively removed as the soil components so long as they have higher boiling points than the nonaqueous solvent.

The degree of reduced pressure in the still 1 is suitably set based on the vapor pressure curve of the particular nonaqueous solvent which is subjected to the treatment. Fig. 10 shows the vapor pressure curves of octamethyl cyclotetrasiloxane as one example of the silicone solvent, a naphthene hydrocarbon as one example of the hydrocarbon solvent, and a special alcohol. It suffices herein to set the degree of reduced pressure in the still 1 based on such a vapor pressure curve as mentioned above.

The apparatus of the present embodiment for regeneration by reduced-pressure distillation can be applied not only to the regeneration by distillation of such a nonaqueous solvent as a nonaqueous cleaning agent but also to the regeneration by distillation of an aqueous cleaning agent. In this case, the aqueous cleaning agent which must be heated up to 100°C under the atmospheric pressure as shown in Fig. 10 can be boiled and vaporized at 50°C by reducing the ambient pressure to 90 Torrs, for example.

To the first and second heat-exchange flow paths 2 and 3, the heat-resistant oil is supplied as the heating medium in a heated state from an oil heater 4. As concrete examples of the heat-resistant oil to be used as heating medium herein, mineral oils and synthetic oils which have high boiling points (such as, for example, boiling points exceeding 250°C), exhibit sparing flammability as evinced by high flash points (such as, for example, flash points exceeding 230°C), manifest low viscosity, and excel in thermal conductivity may be cited. Particularly, in the present embodiment, since an oil tank 6 is opened into the ambient air as will be specifically described herein below, synthetic type thermal medium oils such as, for example, a product of Idemitsu Kosan Co., Ltd. marketed under trademark designation of "Daphne Alpha Thermo 22A" and a product of Nippon Oil Co., Ltd. marketed under trademark designation of "High-Tech Therm 32" which excel in stability to resist oxidation are used advantageously.

The oil heater 4 is provided in the lower part of an oil tank 6 storing therein a heat-resistant oil (heating oil) 5 as a heating medium with a heater such as, for example, an electric heater 7. The oil tank 6 is provided with an oil level sensor 8 for electrically detecting the amount of the oil based on the vertical motion of a float. An external air communicating tube 9 having one end thereof opened into the ambient air is connected in a communicable manner to the upper part of the oil tank 6.

An oil supply tube 10 is connected to the outlet side of the oil tank 6. An oil circulating pump 11 and an oil temperature sensor 12 are inserted in the length of the oil supply tube 10. To the inlet side of the oil tank 6 is connected an oil reflux tube 13 for returning the oil from the still 1. The oil supply tube 10 is connected to the inlet side at the position of the lower part of the first heat-exchange flow path 2. The outlet of the first heat-exchange flow path 2 which opens toward the lateral surface of the still 1 and the inlet of the second heat-exchange flow path 3 which opens toward the bottom surface of the still 1 are interconnected through the medium of a communicating tube 14. The oil reflux tube 13 mentioned above is connected in a communicable manner to the outlet of the second heat-exchange flow path 3 which opens toward the lateral surface of the still 1. In other words, the outlet side positioned in the upper part of the first heat-exchange flow path 2 is made to communicate with the inlet side positioned in the lower part of the second heat-exchange flow path 3 and, at the same time, the outlet side positioned in the upper part of the second heat-exchange flow path 3 is connected in a communicable manner to the inlet side of the oil heater 4.

The second heat-exchange flow path 3 assumes an overall shape of a jacket accommodating the lower part of the still 1. It has the interior thereof divided with a partition plate so as to form an elongate flow path. It is so constructed that the heating oil flowing in through the inlet is enabled to heat the lower part of the still 1 with high efficiency while flowing through the elongate flow path.

In the present embodiment, the oil heater 4 is provided with two electric heaters 7 (7a and 7b) which are capable of being separately electrified. These electric heaters 7a and 7b are controlled by an electric control means 15 (shown in Fig. 3) which will be specifically described herein below; the one electric heater 7a serving the purpose of heating and warming the oil by continuously supplying electricity during the step of distillation and the step of boiling down and the other electric heater 7b serving the purpose of heating the oil by repeating an ON-OFF switching operation in response to a signal issued from the oil temperature sensor 12.

When the electric control means 15 senses the arrival of the temperature of the oil at the preset upper limit based on the signal from the oil temperature sensor 12, it continues the supply of electricity to the one electric heater 7a and warms the oil and discontinues the supply of electricity to the other electric heater 7b. When the temperature of the oil then falls gradually and arrives at the preset lower limit, the electric control means 14 senses this arrival based on the signal from the oil temperature sensor 12 and starts supply of electricity to the two electric heaters 7a and 7b and consequently heats the oil.

As a result, the temperature of the oil heated by the oil heater 4 can be maintained accurately at an appropriate level between the upper limit and the lower limit and can be prevented from abruptly falling by the warming operation of the electric heater 7a which is kept in operation continuously. When the heating oil is supplied to the still 1, therefore, the solvent under treatment can be heated and vaporized in a stable state at a temperature suited to the characteristic volatility of the solvent (the appropriate temperature range between the preset upper and lower limit) and the degree of rectification can be consequently heightened because the temperature of the heating oil is stable. Further, the oil heater 4 permits a large cut in the labor and the cost which are required for the installation of supplementary devices and the management of equipment unlike the conventional heaters using steam.

Even when the oil circulating pump 11 accidentally produces a mechanical trouble and develops a situation inhibiting supply of the heating oil, the oil tank 6 can be kept from incurring such injuries as rupture because the gas entrapped in the oil tank 6 is released through the external air communicating tube 9 into the atmosphere. When the oil supply in the oil tank 6 is abnormally decreased, the possibility of the oil tank 6 being heated empty is nil because the electric control means 15 stops supplying electricity to all the electric heaters 7 in response to the signal from the oil level sensor 8. The position of the oil temperature sensor 12 is not particularly critical so long as it is disposed between the interior of the oil heater 4 and the heat-exchange flow paths 2 and 3 of the still 1.

By the operation of the oil circulating pump 11, the heating oil heated by the oil heater 4 to an appropriate temperature is transferred under pressure toward the still 1 side through the oil supply tube 10. In the still 1, when the heating oil is supplied under pressure through the inlet of the first heat-exchange flow path 2, the heating oil while flowing through the interior of the first heat-exchange flow path 2 transfers the heat thereof to the solvent under treatment in the still 1, with the result that the solvent under treatment will be heated. Then, the heating oil flowing out of the outlet of the first heat-exchange flow path 2 is supplied via the communicating tube 14 to the inlet of the second heat-exchange flow path 3. The heating oil, while flowing through the interior of the second heat-exchange flow path 3, transfers the heat thereof from the outside of the still 1 to the solvent under treatment therein. As a result, the solvent under treatment which is held in the still 1 is directly heated internally by the first heat-exchange flow path 2 which is immersed in the solvent and is again heated indirectly from the outside of the second heat-exchange flow path 3 through the wall of the still 1.

In the first heat-exchange flow path 2, the heating oil flows in through the inlet side positioned in the lower part and flows out through the outlet side positioned in the upper part. Likewise in the second heat-exchange flow path 3, the heating oil flows in through the inlet side positioned in the lower part and flows out through the outlet side positioned in the upper part and then returns to the oil heater 4. Even when the heating oil happens to entrain bubbles and the heat-exchange flow paths 2 and 3 happen to suffer occurrence of bubbles therein, the heating oil is readily allowed to flow into the heat-exchange flow paths 2 and 3 and is not inhibited by the bubbles from flowing therein. In the heat-exchange flow paths 2 and 3, therefore, the heating is infallibly carried out with high efficiency without suffering the bubbles to interfere with the transfer of heat.

The heating oil which has been deprived of the heat or caused to incur a fall of temperature while passing through the first heat-exchange flow path 2 and the second heat-exchange flow path 3 is returned via the oil reflux tube 13 to the oil heater 4 to be heated again therein. In other words, the heat-resistant oil which functions as the heating medium is circulated through the oil heater 4 and the first heat-exchange flow path 2 and the second heat-exchange flow path 3 to transfer the heat of the electric heater 7 to the solvent under treatment in the still 1 and consequently heat the solvent under treatment with high efficiency. Since the heating oil is sequentially passed through the first heat-exchange flow path 2 disposed inside the still 1 and the second heat-exchange flow path 3 disposed on the peripheral side of the still 1 in the order mentioned, the heating oil is prevented from decreasing in temperature by any factor other than the exchange of heat with the solvent under treatment and is enabled to heat the solvent under treatment with high efficiency.

The still 1 is provided in the lower lateral part thereof with a solvent inlet 16 and in the upper part thereof with a vapor outlet 17. This vapor outlet 17 is communicably connected via a vapor pipe 18 to a vapor condensing device such as, for example, a condenser 19. The still 1 has a waste liquid discharge mouth 20 formed in the lower part thereof. This waste liquid discharge mouth 20 is connected via a waste liquid pipe 21 to a liquid storage tank 22 for temporary storage of the waste liquid which is the residue of distillation formed of soil components. The liquid storage tank 22 and the devices attendant thereon will be specifically described herein below.

To the solvent inlet 16 is connected a solvent pipe 24 which has a solvent injection valve 23 inserted therein. This solvent pipe 24 is provided halfway in the length thereof with a liquid level adjuster 25 which opens and closes the valve thereof in response to the vertically reciprocating motion such as of a float, for example. The upper part of the liquid level adjuster 25 is communicably connected to the upper part of the still 1 to allow adjustment of the level of the solvent under treatment in the still 1. The liquid level adjuster 25 has an open-close switch level so set that it is closed to stop the introduction of the solvent under treatment when the first heat-exchange flow path 2 submerges in the solvent under treatment in the still 1 and the level of the solvent under treatment rises to a prescribed height such as, for example, 20 to 30 mm above the upper end of the second heat-exchange flow path 3 and it is opened to start the introduction of the solvent under treatment into the still 1 when the level of the solvent under treatment falls below the prescribed height. When the solvent injection valve 23 is opened, therefore, the liquid level adjuster 25 always keeps the level of the solvent under treatment in the still 1 above the first and second heat-exchange flow paths 2 and 3.

Since the liquid level of the solvent under treatment in the still 1 is always kept above the first and second heat-exchange flow paths 2 and 3 as described above, these heat-exchange flow paths will not be directly exposed to such reactive substances as acids and alkalis which are contained in the vapor of the solvent under treatment. The apparatus, therefore, is enabled to acquire an elongated service life because the corrosion of the heat-exchange flow paths 2 and 3 by the reactive substances can be precluded. The corrosion of the still 1 can be inhibited by such means as, for example, a rectifying net 50 which will be specifically described herein below and the inspection of the state of this corrosion can be effected by means of a reaction bar 51.

The liquid level adjuster 25 is provided on the upstream side thereof with an economizer 26 oriented to heat exchange and is constructed so as to preheat the solvent under treatment being fed to the still 1 with the vapor emanating from the still 1. The economizer 26 is provided on the upstream side thereof with a first filter 27 for adsorbing dust and other soils contained in the solvent under treatment a second filter 28 for removing by adsorption such reactive substances as acids and alkalis contained in the solvent under treatment. The first filter 27 serves the purpose of removing by adsorption the dust and other soils by such means as, for example, a filter paper and the second filter 28 serves the purpose of removing by adsorption the reactive substances such as, for example, sulfur and chloride with the aid of such an adsorbent as, for example, zeolite. When the first and second filters 27 and 28 are each fabricated in the form of a detachable cartridge, they allow easy replacement. The positions for setting up the first and second filters 27 and 28 may be interchanged.

The vapor pipe 18 connected to the vapor outlet 17 goes through the economizer 26, passes in a zigzagging or spiralled form through the interior of the condenser 19, extends through a chuck valve 29, and is connected to a vacuum generating device 30. The vacuum generating device 30 is composed of a solvent circulating pump 33 and an ejector 34 which are disposed in a solvent circulating path 32 for circulating the regenerated nonaqueous solvent via a water separator 31.

The regenerated solvent emanating from the water separator 31 through the lower part thereof is circulated via the solvent circulating path 32 back to the upper part of the water separator by the solvent circulating pump 33. This solvent circulating path 32 is provided halfway in the length thereof with the ejector 34. The downstream side of the chuck valve 29 is connected to an aspirating mouth 35 of the ejector 34. The ejector 34 is provided with a nozzle part 36 having a flow path of a gradually dwindling cross section. The aspirating mouth 35 opens halfway along the length of the nozzle part 36. When the solvent which has been forwarded under pressure from the solvent circulating pump 33 and passed through the ejector 34 is in the process of passing through the nozzle part 36, therefore, the flow rate of the solvent abruptly increases and, at the same time, the flow pressure thereof decreases to the extent of exerting a negative pressure on the nozzle part 36. Since the aspirating mouth 35 of the nozzle part 36 communicates through the chuck valve 29, the condenser 19, etc. with the upper part of the still 1 via the vapor pipe 18, the negative pressure produced in the ejector 34 causes the interior of the still 1 to assume the prescribed degree of reduced pressure.

The ejector 34 in the present embodiment is composed mainly of the nozzle part 36 having a flow path of a gradually dwindling cross section as described above, a diffuser having a flow path of a gradually enlarging cross section, and the aspirating mouth 35 opening halfway in the length of the nozzle part 36. A secondary current is drawn in through the aspirating mouth 35 by the negative pressure which is generated during the passage of a driving current through the nozzle part 36. The ejector 34 serves the purpose of transferring a large volume of a gas or a liquid having a lower pressure than the pressure of the driving current. In the present embodiment, the interior of the still 1 is retained under the prescribed condition of reduced pressure by causing the secondary current or the gas in the still 1 to be drawn in through the aspirating mouth 35.

Unlike the conventional vacuum generating apparatus, the ejector 34 has no use for any movable part. By retaining the interior of the still 1 under the prescribed state of reduced pressure by means of the ejector 34 as described above, therefore, the ingress of such soil components as, for example, oil and grease into the regenerated solvent as incurred by the conventional vacuum generating apparatus can be precluded. As a result, the degree of rectification can be enhanced and the efficiency of the treatment can be improved. Further, since the ejector 34 is disposed in the solvent circulating path 32 of the water separator 31 and, consequently, no particular circulation system is required to be installed for the operation of the ejector 34, therefore, the apparatus can be simplified and the cost of equipment can be cut. The ejector 34 acquires excellent durability because it uses no mechanically movable part, permits easy maintenance, and has no possibility of sacrificing the force of aspiration on account of abrasion.

The solvent under treatment is heated in the still 1 which is retained under such a condition of reduced pressure as described above. The solvent under treatment, i.e. the nonaqueous solvent containing soil components, is easily vaporized with the soil components left behind in the still 1. The nonaqueous solvent which has been heated and vaporized within the still 1, namely the solvent gas, is aspirated through the vapor pipe 18 and liquefied by condensation in the condenser 19. The distillate resulting from the liquefaction by condensation, namely the regenerated solvent, is aspirated by the aspirating action of the ejector 34, passed through the chuck valve 29, and introduced through the aspiring mouth 35 of the ejector 34 into the circulating current of the solvent inside the solvent circulating path 32. The combined regenerated solvent flows into the water separator 31 which is disposed on the downstream side of the ejector 34.

The water separator 31 is divided into an upper chamber 31a and a lower chamber 31b. At the approximate center in the upper chamber 31a, an element supporting bar 38 provided in the upper part thereof with an opening part 37 is erected. This element supporting bar 38 is capped with an element 39. The lower chamber 31b and the upper chamber 31a are allowed to inter-communicate internally via the opening part 37 disposed in the element supporting bar 38 and also externally via the solvent circulating path 32 as described above. The lower chamber 31b is provided in the upper part thereof with a discharge mouth 40 for discharging the regenerated nonaqueous solvent. The nonaqueous solvent deprived of such soil components as, for example, water is led via the discharge mouth 40 to a regenerated solvent tank (not shown).

In the water separator 31, when the nonaqueous solvent being circulated and the nonaqueous solvent newly liquefied by condensation are supplied from the upper part of the upper chamber 31a and passed through the element 39, the combined nonaqueous solvent is deprived of such soil components as, for example, water, sulfur, and chloride which have mingled into the regenerated solvent through the phenomenon of azeotropy. Part of the nonaqueous solvent which has been led through the opening part 37 of the element supporting bar 38 into the lower chamber 31b is circulated again to the upper chamber 31a via the solvent circulating pump 33 and the rest of the nonaqueous solvent is discharged through the discharge mouth 40 into the regenerated solvent tank. The new regenerated solvent which has been introduced via the ejector 34 is not wholly extracted directly via the discharge mouth 41. Generally, it is extracted via the discharge mouth 40 after it has been passed several times by the circulating current of solvent through the water separator 31 and deprived thoroughly of the soil components as a result. The regenerated solvent which is extracted through the discharge mouth 40 exhibits a high degree of rectification and manifests such functions as, for example, cleaning force at levels not inferior to those of a new solvent.

The element 39 which is inserted into the water separator 31 mentioned above is shaped like a cylinder having formed in the central part thereof an insertion hole 39a for allowing insertion therein of the element supporting bar 38 as shown in Fig. 4. It is provided on the outer periphery thereof with a filter paper part 39b and on the inner periphery of the filter paper part 39b with a water absorbing part 39c formed of non-woven fabric.

The water separator 31 concurrently serves as a liquid storage tank for temporarily storing the regenerated nonaqueous solvent and the ejector 34, therefore, may well be depicted as being inserted into the circulation system via the liquid storage tank. When no use is found for the water separator 31, it may be allowed instead to form the circulation system through the medium of the liquid storage tank so as to permit insertion of the ejector in this circulation system. Particularly when an aqueous cleaning agent is used as the liquid for treatment, the ejector may be inserted into the circulation system through the medium of the liquid storage tank.

The vapor pipe 18 is provided on the still 1 side thereof with a thermometer 41 for measuring the temperature of the vapor. A reduced pressure degree sensor 43 is attached to a tube 42 connected to the upper part of the still 1 so that the state of reduced pressure in the still 1 may be sensed by the electric control means 15. A peephole 1a is formed in the lower lateral part of the still 1 so as to allow inspection of the interior of the still 1.

Inside the condenser 19 mentioned above, cooling water is flowing from a cooling water inlet 44 in the lower part toward a cooling water outlet 45 in the upper part. A cooling water valve 47 and a cooling water strainer 48 are formed in the length of a cooling water pipe 46 serving to supply the cooling water to the cooling water inlet 44. The cooling water which is discharged through the cooling water outlet 45 is forwarded to a cooling device 49 of the liquid storage tank 22 which will be described specifically herein below.

In the present embodiment, the metal net 50 having an outer peripheral shape practically identical with the inner peripheral shape of the still 1 is detachably disposed at a position higher than the liquid level of the solvent under treatment supplied to the upper part of the still 1 for the purpose of improving the degree of rectification. This metal net 50 is formed of two or three superposed metal gauzes of 10 to 60 mesh having a wire diameter of not less than 0.2 mm. When the metal net 50 is given a wavy surface, this wavy surface is at an advantage in producing numerous empty spaces therein. This metal net 50, when the nonaqueous solvent happens to boil, goes to prevent the soil components as, for example, oil and grease which form an azeotrope with the solvent from rising to the upper part of the still 1 and mingling into the solvent gas and, at the same time, removes the soil components by adhesion, and improve the degree of rectification in consequence of these functions.

Further, into the still 1, the reaction bar 51 is inserted through the hole formed in the ceiling surface of the still 1. This reaction bar 51 has a length such that the reaction bar 51, when inserted into the still 1, reaches the neighborhood of the bottom part thereof. It is made of a substance which reacts more readily with such reactive substances as acids than the material forming the still 1. For example, it is made of aluminum or copper which readily reacts with sulfur or chlorine. The extent to which the still 1 is corroded can be determined by usually keeping the reaction bar 51 inserted in the still 1, extracting it periodically from the still 1, and inspecting it as to the degree of the corrosion caused on the reaction bar 51, particularly the portion thereof proximate to the liquid level. This periodic inspection of the reaction bar 51 serves the purpose of preventing the still 1 from incurring such an accident as, for example, breakage.

The liquid storage tank 22 which is disposed below the still 1 as described above serves the purpose of temporarily storing the waste liquid (sludge) formed of such soil components as oil and grease remaining in the still 1. This waste liquid is the so-called residue of distillation. The liquid storage tank 22 has formed in the upper part thereof a waste liquid inlet mouth 52. This waste liquid inlet mouth 52 is connected to the waste liquid discharge mouth 20 of the still 1 through the medium of the waste liquid pipe 21 having inserted therein a switch valve 53. The lower side, namely the waste liquid inlet mouth 52 side, of the waste liquid pipe 21 relative to the switch valve 53 is branched and connected to a communicating pipe 54. This communicating pipe 54 is communicably connected to the lateral part of the still 1 through the medium of a three-way switch valve 55 capable of introducing the ambient air. By switching this three-way switch valve 55, the liquid storage tank 22 can be selectively made to communicate with the still 1 side or the ambient air side.

When the three-way switch valve 55 is turned to communicate with the still 1 side, for example, the interior of the liquid storage tank 22 assumes the same degree of reduced pressure as the still 1. When the switch valve 53 of the apparatus in this state is opened, the waste liquid in the still 1 can be allowed to flow down from the waste liquid discharge mouth 20 into the liquid storage tank 22 without upsetting the vacuum system of the still 1. When the three-way switch valve 55 is turned to communicate with the ambient air side, the waste liquid stored in the liquid storage tank 22 can be easily made to flow out through a waste liquid discharge mouth 56.

The still 1 is so constructed as to discharge the waste liquid (residue of distillation) into the liquid storage tank 22 which is capable of assuming the same degree of reduced pressure as the still 1. Thus, the waste liquid can be discharged smoothly without upsetting the vacuum system inclusive of the still 1. When the solvent under treatment is again distilled after the discharge of the waste liquid, therefore, the time and trouble to be spent in connection with the vacuumization of the still 1 can be cut to a great extent. Further, since the liquid storage tank 22 is enabled by the three-way switch valve 55 to open into the ambient air, therefore, the waste liquid can be smoothly discharged into a waste liquid tank 62 which will be described specifically herein below.

The cooling device 49 is disposed around the periphery of the liquid storage tank 22. In this cooling device 49, the cooling water is flowing from a cooling water inlet 57 in the lower part toward a cooling water outlet 58 in the upper part. This cooling water has emanated from the cooling water outlet 45 of the condenser 19. This liquid storage tank 22 has formed in the lower part thereof the waste liquid discharge mouth 56. This waste liquid discharge mouth 56 is connected to a waste liquid pipe 60 having a waste liquid valve 59 inserted therein. The leading end part of this waste liquid pipe 60 constitutes a waste liquid outlet 61. When the waste liquid valve 59 is opened, therefore, the waste liquid which has been temporarily stored in the liquid storage tank 22 and cooled therein is discharged through the waste liquid outlet 61 via the waste liquid pipe 60. As a result, the waste liquid discharged from the still 1 cannot be discharged into the waste liquid tank 62 until it is cooled. The discharge of the waste liquid, therefore, can be implemented safely.

Now, the waste liquid tank 62 disposed below the liquid storage tank 22 and a mounting base 63 for supporting the waste liquid tank 62 will be described below with reference to Fig. 5 and Fig. 6.

Below the liquid storage tank 22 mentioned above is disposed the mounting base 63 which supports the waste liquid tank 62 for receiving the waste liquid. By a slide device 65 disposed on a rack 64 supporting the apparatus for regeneration by reduced-pressure distillation, this mounting base 63 is rendered movable from below the liquid storage tank 22 toward the front of the apparatus for regeneration by reduced-pressure distillation (toward the left in the bearings of Fig. 5 and Fig. 6).

For moving the mounting base 63 outside the apparatus for regeneration, it suffices to open a door 66 disposed on the front side of the apparatus for regeneration and extract the mounting base 63 supported by the slide device 65 toward the front (to the left in the bearings of Fig. 5 and Fig. 6). The extraction of the mounting base 63 results in simultaneously extracting the waste liquid tank 62 supported on the mounting base 63. By having the waste liquid tank 62 extracted to the position for removal of the waste liquid tank, the waste liquid contained in the waste liquid tank 62 can be discarded (Fig. 6). When the mounting base 63 is admitted completely into the apparatus for regeneration by reduced-pressure distillation [to the position for admitting the waste liquid (residue of distillation)], the waste liquid tank 62 supported on the mounting base 63 is enabled to receive the waste liquid stored in the liquid storage tank 22 (Fig. 5).

The rack 64 of the apparatus for regeneration by reduced-pressure distillation is provided with a mounting base sensor 67 which serves the purpose of detecting the mounting base 63 supporting the waste liquid tank 62 when the mounting base 63 has slid to the prescribed position for allowing reception of the waste liquid stored in the liquid storage tank 22 (the position for receiving the waste liquid). It is also provided with a waste liquid tank sensor 68 which serves the purpose of detecting the fact that the waste liquid tank 62 is supported on the mounting base 63.

The electric control means 15 operates to open the waste liquid valve 59 disposed in the waste liquid pipe 60 and release the waste liquid from the liquid storage tank 22 only when the mounting base sensor 67 detects the mounting base 63 and, at the same time, the waste liquid tank sensor 68 detects the fact that the waste liquid tank 62 is supported on the mounting base 63. Further, the waste liquid tank 62 is provided therein with a waste liquid amount sensor 69 which detects the fact that the amount of the waste liquid received in the waste liquid tank 62 has reached the prescribed level. When the waste liquid amount sensor 69 has detected the accumulation of the waste liquid to the prescribed amount, the electric control means 15 operates to close the waste liquid valve 59 provided in the waste liquid pipe 60 and stop the discharge of the waste liquid within the liquid storage tank 22.

Owing to these devices which are annexed to the waste liquid tank 62, the accidental escape of the waste liquid from the liquid storage tank 22 can be prevented even when the waste liquid tank 62 is not at the prescribed position or even when the waste liquid tank 62 has been filled with the waste liquid to capacity. As a result, the safety of the discharge of the waste liquid can be improved to a great extent.

Now, the operation of the apparatus for regeneration by reduced-pressure distillation which is constructed as described above and the control of the component members of the apparatus will be described below referring to a schematic block diagram of the electric control means 15 shown in Fig. 3 and a timing chart shown in Fig. 7. When the apparatus is in its initial state, the still 1 and the liquid storage tank 22 are empty, the heating oil circulating system inclusive of the oil heater 4 and the heat-exchange flow paths 2 and 3 is filled with oil, and the solvent circulating system inclusive of the water separator 31 is filled with the previously regenerated solvent.

The electric control means 15 in the present embodiment is constructed after the fashion of a microcomputer, composed of a central processing unit (CPU) 101 storing the program of the operating procedures that has been programmed in advance, ROM 102, RAM 103, etc., and is provided with a heating oil temperature setting and memorizing part 104 capable of setting and memorizing the temperature of a heating oil depending on the kind of solvent, a reduced-pressure degree setting and memorizing part 105 for setting and memorizing the degree of reduced pressure in advance, a distillation timer 106 for setting the time of distillation, a boil-down timer 107 for setting the time for boiling down, a sludge timer 108 for setting the time for keeping open the sludge valve 53 of the still 1, a waste liquid timer 109 for setting the time for keeping open the waste liquid valve 59 of the liquid storage tank 22, etc.

When an operating button on a control panel is depressed, an operation lamp is lit up in response to the signal from the electric control means 15 and, at the same time, the oil circulating pump 11, the solvent circulating pump 33, and the two electric heaters 7a and 7b of the oil heater 4 are severally set operating. At this time, the solvent injection valve 23 remains in its closed state.

When the oil circulating pump 11 is actuated, the oil in the heating oil circulating system is circulated to flow from the oil heater 4 sequentially through the oil supply pipe 10, the first heat-exchange flow path 2 and the second heat-exchange flow path 3 of the still 1, and the oil reflux tube 13 in the order mentioned and return to the oil heater 4. By the operation of the electric heater 7, the oil in the oil circulating system has the temperature thereof gradually elevated. When the solvent circulating pump 33 is actuated, the ejector 34 is caused to generate an aspirating action and the internal pressure of the still 1 is gradually lowered because the solvent in the solvent circulating system begins to circulate.

When the electric control means 15 detects the fact that the temperature of the heating oil has reached the upper limit of temperature predetermined depending on the kind of solvent (at a level in the range of 170 to 180°C, for example, in the case of petroleum, grade 3) in response to the signal from the oil temperature sensor 12 and the fact that the degree of reduced pressure in the still 1 has reached the preset degree of reduced pressure, it sets the distillation timer 106 clocking the operation of distillation, opens the cooling water valve 47 and the solvent injection valve 23, and turns off the electric heater 7b of the oil heater 4 with the other electric heater 7a kept in the ON state.

When the solvent injection valve 23 opens, it begins to admit the nonaqueous solvent (the solvent under treatment) containing the soil components into the still 1. The amount of the solvent under treatment to be admitted into the still 1 is adjusted by the liquid level adjuster 25. The injection of this solvent is continued until the liquid level of the solvent under treatment rises above the upper part of the second heat-exchange flow path 3 and, at the same time, reaches the prescribed level for keeping the first heat-exchange flow path 2 immersed constantly in the solvent under treatment.

When the cooling water valve 47 opens, the cooling water is supplied into the condenser 19 to cool the condenser 19 and begins the liquefaction of the solvent by condensation. The cooling water emanating from the condenser 19 flows through the cooling device 49 of the liquid storage tank 22 to cool the liquid storage tank 22.

When the introduction of the solvent is started only after the temperature of the heating oil reaches the prescribed level as described above, the heating of the solvent can be initiated more quickly and more efficiently than when the cold solvent is first introduced and then the heating oil is gradually heated. Further, when the solvent is introduced after the interior of the still 1 reaches the prescribed degree of reduced pressure, the heating of the solvent is carried out safely because such disasters as ignition and explosion can be precluded.

When the heating oil which has been heated to the prescribed temperature by the oil heater 4 flows through the interiors of the first heat-exchange flow path 2 and the second heat-exchange flow path 3 of the still 1, the solvent under treatment which is retained in the still 1 is heated and consequently caused to undergo reduced-pressure distillation. Then, the solvent gas resulting from the gasification is aspirated by the aspirating force of the ejector 34 into the condenser 19 and liquefied by condensation therein. The liquefied solvent is aspirated by the ejector 34 and added to the circulating solvent and repeatedly passed through the water separator 31 to be deprived of the water. It is ultimately extracted in the form of pure regenerated solvent through the solvent discharge mouth 40.

The liquid level of the solvent under treatment in the still 1 falls as the solvent in the still 1 is continuously subjected to reduced-pressure distillation as described above. When the liquid level falls to a certain extent, the liquid level adjuster 25 opens to receive the inflow of the solvent. In the still 1, therefore, the reduced-pressure distillation is continued.

The reduced-pressure distillation which is continued in the still 1 utilizes the heat of the heating oil as the heat source. While the reduced-pressure distillation proceeds, the temperature of the oil which is warmed solely with the heat of the electric heater 7a gradually falls. The temperature of the oil is continuously monitored by the electric control means 15 in accordance with the signal from the oil temperature sensor 12. When the temperature of the oil falls to the lower limit of the prescribed temperature range (which is 165°C when the upper limit thereof is 170°C, for example, though variable with the kind of solvent), the electric control means 15 turns on the other electric heater 7b of the oil heater 4 to resume the heating of the heating oil.

When the other electric heater 7b is also turned on, the temperature of the heating oil being circulated is elevated to the upper limit of the temperature range within a short span of time. When this upper limit of the temperature range is reached, the electric control means 15 responds to the signal from the oil temperature sensor 12 and turns off the other electric heater 7b. As a result, the electric heater 7a alone is left heating and keeping the oil in a warmed state. The temperature of the heating oil which is supplied to the heat-exchange flow paths 2 and 3 of the still 1, therefore, can be infallibly maintained in the optimum temperature range which is set to suit the kind of the solvent. As a result, the nonaqueous solvent, i.e. the substance subjected to the regeneration by reduced-pressure distillation, is allowed to acquire heightened purity and the possibility of the soil components being simultaneously subjected to reduced-pressure distillation can be reduced.

When the operation described above is performed repeatedly, the nonaqueous solvent containing such soil components as, for example, oil and grease can be regenerated in a large amount by reduced-pressure distillation, whereas the ratio of the soil components which are left behind in the still 1 in consequence of the reduced-pressure distillation gradually increases. The distillation step described above, therefore, is shifted to the boil-down step after the elapse of the prescribed length of time (30 minutes, for example, when the degree of soil is about 10%) which is set in advance by the distillation timer 106.

When the distillation timer 106 issues a signal indicating the elapse of the prescribed length of time, the electric control means 15 starts the boil-down timer 107 and, at the same time, closes the solvent injection valve 23. Incidentally, the control of the electric heater 7 of the oil heater 4 is made in the same manner as at the step of distillation and the cooling water valve 47 continues to remain in the opened state. As a result, the solvent in the still 1 continues to undergo reduced-pressure distillation and gradually decreases its amount. To be specific, even when the solvent in the still 1 continues to decrease its amount in consequence of the reduced-pressure distillation, it is not replenished but is left boiling down. It ultimately turns into a sludgy liquid containing the soil components at a very high ratio.

When the prescribed length of time (such as, for example, 5 minutes) set on the boil-down timer 107 elapses and the signal indicating the termination of the boil-down phase is issued, the electric control means 15 starts the sludge timer 108. At this time, all the electric heaters 7 of the oil heater 4 are turned off to stop heating the oil. The electric control means 15 opens the sludge valve 53 when the boil-down step is shifted to the sludge discharge step.

In this case, the interior of the liquid storage tank 22 assumes the same degree of reduced pressure as that of the still 1 because the liquid storage tank 22 communicates with the still 1 through the medium of the communicating pipe 54. When the sludge valve 54 is opened while the apparatus is in this state, the hot sludgy liquid which is formed of such soil components as, for example, oil and grease remaining in the still 1 is allowed to flow down from the still 1 into the liquid storage tank 22 and temporarily stored in the liquid storage tank 22. At this time, since the interior of the still 1 and that of the liquid storage tank 22 are both in the state of reduced pressure, the sludgy liquid easily flows down into the liquid storage tank 22 which is positioned below the still 1. After the operation is shifted to the sludge discharge step, the supply of the cooling water to the cooling device 47 of the liquid storage tank 22 is continued because the cooling water valve 49 is kept open. As a result, the sludge which has flowed down into the liquid storage tank 22 is abruptly cooled with the cooling water. Optionally, the liquid storage tank 22 may be adapted to assume the state of reduced pressure during the course of the sludge discharge step.

Then, when the prescribed length of time set on the sludge timer 108 elapses and the sludge discharge step terminates, the electric control means 15 starts the waste liquid timer 109, causes the three-way switch valve 55 to open toward the ambient air side and the liquid storage tank 22 side and close toward the still 1, introduces the ambient air into the liquid storage tank 22 until normal pressure, and then opens the waste liquid valve 59. At this time, the waste liquid valve 52 is opened and the waste liquid tank 62 receives the cooled sludge for storage therein by the control of the electric control means 15 only when the mounting base sensor 67 detects the fact that the mounting base 63 is set at the prescribed position and, at the same time, the waste liquid tank sensor 68 detects the fact that the waste liquid tank 62 is supported on the mounting base 63. Then, when the waste liquid amount sensor 69 provided in the waste liquid tank 62 detects the presence of the waste liquid in the prescribed amount, the electric control means 15 operates to close the waste liquid valve 59 and stop the discharge of the sludge from the liquid storage tank 22.

When the prescribed length of time set on the waste liquid timer 109 elapses and the waste liquid step terminates, the electric control means 15 closes the waste liquid valve 59 and completes one cycle of operation. When the series of steps of operations mentioned above is completed, the electric control means 15 causes the three-way switch valve 55 to close toward the ambient air side and open toward the still 1 side and the liquid storage tank 22 side, sets the interior of the liquid storage tank 22 at the state of reduced pressure, and repeats the operation for regenerating the solvent under treatment described above. Owing to this procedure, the time and labor incurred in the discharge of the waste liquid is cut to a great extent. Further, the work of regenerating the solvent under treatment can be started immediately after the sludge discharge step because the state of reduced pressure inside the still 1 can be maintained separately from that in the liquid storage tank 22 after the sludge discharge step.

At the outset of the waste liquid step, such an alarm device as a buzzer may be actuated for the purpose of alerting workers to the imminent work of effluence discharge. When the effluence step terminates, the apparatus for regeneration by reduced-pressure distillation may be stopped to discontinue the work of regeneration. When the waste liquid tank 62 has not been filled to capacity and therefore is in a state ready for continuing the work of regeneration, the operation of the apparatus need not be stopped but may be continued to start the next cycle of regeneration.

Since the waste liquid in the still 1 is discharged through the waste liquid outlet mouth 56 after it has been transferred from the still 1 to the liquid storage tank 22 and then cooled with the cooling water flowing through the cooling device 49 of the liquid storage tank 22 as described above, the apparatus of the present embodiment can be safely operated totally unlike the conventional apparatus for regeneration which has the possibility of either inflicting a burn on workers engaging in handling the apparatus or exposing the apparatus to fire hazard.

By synchronously switching the sludge valve (switch valve) 53 and the three-way switch valve 55 thereby appropriately adjusting the internal pressure of the still 1 and that of the liquid storage tank 22, the distillation step can be smoothly carried out and, at the same time, the work of transferring the waste liquid can be easily performed because the interior of the still 1 and that of the liquid storage tank 22 are both in the state of reduced pressure at the distillation step and the sludge discharge step. Further, at the step of cooling the sludge and the waste liquid step (the step of discharging the waste liquid into the waste liquid tank 62), the work of discharging the waste liquid can be easily carried out because the interior of the liquid storage tank 22 is maintained under normal pressure owing to the ingress of the ambient air. In this case, the step of distillation can be continued without interruption because the interior of the still 1 is retained in the state of reduced pressure.

The step of cooling the sludge and the waste liquid step mentioned above, therefore, can be carried out freely at any time independently of the distillation step. The distillation step can be restarted immediately after the hot waste liquid has been transferred to the liquid storage tank 22 at the step of sludge discharge. Thus, the distillation step can be continued without necessitating any idle time and the nonaqueous solvent containing soil components can be efficiently regenerated.

When octamethyl cyclotetrasiloxane is used as the solvent for treatment, for example, the apparatus for regeneration by reduced-pressure distillation in the present embodiment described above is simply needed to suspend the distillation step only during the course of the sludge discharge step (the step of allowing the hot sludgy liquid to fall from the still 1 to the liquid storage tank 22) which lasts for about 60 seconds after the completion of the step of boiling down the sludge. In other words, the idle time between the distillation steps is about 60 seconds. The idle time is owing to the maintenance of the degree of reduced pressure in the still 1, the ease with which the sludge is discharged, and the independence of the sludge cooling step relative to the other steps mentioned above.

In contrast, the conventional apparatus for vacuum distillation requires the still to be manually opened for the sake of exposure to the ambient air after completion of the step of boiling down the sludge. In this case, since the temperature of the sludge which has been boiled down is in the approximate range of 100 to 120°C, the still holding the sludge of such a high temperature cannot be opened immediately into the ambient air. About 4 hours' time is necessary for sufficiently cooling the hot sludge when octamethyl cyclotetrasiloxane is used as the solvent for treatment. The time necessary for this cooling and the time required for the interior of the still 1 to be vacuumized again to the prescribed degree of reduced pressure jointly constitute the idle time in this case. Thus, the apparatus for regeneration by reduced-pressure distillation in the present embodiment allows a very large cut in the idle time attendant on the discharge of the sludge.

Now, another embodiment of this invention will be described below with reference to Fig. 8 which is a cross section showing the essential part of the apparatus involved. In the present embodiment, identical parts to those dealt with in the preceding embodiment will be denoted by the same reference numerals and omitted from the following description.

The still 1 proofed against pressure and assuming the general shape of a cylinder is provided with a heating tank 71 which is adapted to cover the lower outer periphery thereof as shown in Fig. 8. This heating tank 71 has the bottom part of the still 1 plunged therein from the upside and it is filled with heat-resistant oil which is destined to serve as a heating medium. On the inner bottom surface of this heating tank 71, an oil circulating rectifying plate 72 is erected so as to encircle the lower outer periphery of the still 1.

This oil circulating rectifying plate 72 has a height such as to give an empty space between the upper edge thereof and the upper side of the heating tank 71 and it is provided in the lower part of the wall thereof with a plurality of oil flow paths 73. The heat-resistant oil mentioned above is filled in the heating tank 71 to a height enough for the oil circulating rectifying plate 72 to be completely immersed therein. The oil circulating rectifying plate 72 is only required to partition the interior of the heating tank 71 into an inner side and an outer side and providing an empty space for allowing the oil to produce a vertical motion therein.

The heating tank 71 is provided with two electric heaters 7a and 7b immersed in the heating medium and an oil temperature sensor 12 for measuring the oil temperature in the inner side of the oil circulating rectifying plate 72, under the bottom of the still 1. An ambience communicating tube 9 having one end part opened into the atmosphere is connected by the other end part to the upper part of the heating tank 71 so as to establish communication between the interior of the heating tank 71 and the ambient air. The two electric heaters 7a and 7b, similarly to those of the preceding embodiment, are turned on and off as controlled by the electric control means so as to adjust constantly the temperature of the oil within the range which is optimum for the characteristic volatility of the solvent under treatment.

The apparatus of the present embodiment is identical in construction with that of the preceding embodiment except for the particular aspect stated above. The distillation step, the waste liquid discharge step, etc. of the method of the present embodiment are carried out in the same manner as in the method of the preceding embodiment.

In the apparatus of the present embodiment for regeneration by reduced-pressure distillation, the oil which has been heated by the heater 7 rises along the inner side of the oil circulating rectifying plate 72, fulfills the role of heating the lower lateral part and the bottom part of the still 1, then flows over the oil circulating rectifying plate 72, and falls down between the lateral side of the heating tank 71 and the oil circulating rectifying plate 72. Subsequently, it passes through the plurality of oil flow paths 73 formed in the lower part of the oil circulating rectifying plate 72 and returns to the inner side of the oil circulating rectifying plate 72. Since the oil heated by the heater 7 therefore has the convection thereof rectified by the oil circulating rectifying plate 72, it can efficiently heat the lower lateral part and the bottom part of the still 1. Further, since the still 1 has integrally formed in the lower part thereof the heating tank 71 possessed of the heater 7, the apparatus as a whole enjoys such merits as dimensional compaction and easy installation and relocation.

Now, an embodiment the still part of which is shown in Fig. 9 will be described below. This still 1 has a circulating pipe 76 communicably interconnect an upper circulating mouth 74 opened in the upper lateral side of the heating tank 72 and a lower circulating mouth 75 opened in the inner bottom part of the oil circulating rectifying plate 72 and also has a small circulating pump 77 disposed halfway in the length of the circulating pipe 76. This still 1 is identical in construction with the still (Fig. 8) mentioned above except for the components just mentioned. The apparatus as a whole is identical in construction with the apparatus of the preceding embodiment except for the still.

In the still 1 constructed as described above, when the heaters 7a and 7b heat the oil inside the heating tank 71, the oil of a consequently elevated temperature rises along the inner side of the oil circulating rectifying plate 72 and heats the solvent held inside the still 1. Part of the oil having the temperature thereof lowered in consequence of heating the solvent is passed through the upper circulating mouth 74 and the circulating pipe 76 and returned through the lower circulating mouth 75 in the bottom part to the interior of the heating tank and the rest of the cooled oil flows down the outer side of the oil circulating rectifying plate 72 and returned to the bottom side thereof. Thus, in the present embodiment, the naturally generated convection rectified by the oil circulating rectifying plate 72 and the forced circulation generated by the action of the circulating pump 77 jointly cause the oil to vigorously flow through the medium of the interior of the heating tank 71 partitioned by the oil circulating rectifying plate 72 and the circulating pipe 76. Incidentally, the oil which is circulated through the lower circulating mouth 75 into the heating tank 71 flows upwardly in the same direction as the oil fluidified by the natural convection and, therefore, functions concurrently to accelerate the natural convection.

In the still 1 of the present embodiment, therefore, the reduced-pressure distillation can be implemented with high efficiency because the heat generated by the heaters 7a and 7b is efficiently transferred to the solvent in the still 1 through the medium of the oil. Besides, since the flowability of the oil which is contacting the heaters 7a and 7b is enhanced by heightening the inherent flowability of the oil, the possibility that the temperature of the oil contacting the heaters 7a and 7b will be locally elevated accidentally can be precluded. As a result, the possibility that the oil will be oxidized by super-heating, the produced oxide of the oil will adhere fast to the heaters 7a and 7b and prevent the heaters from radiating heat, and such troubles as breakage of the electric heating wires of the heaters 7a and 7b due to super-heating can be precluded. The circulating pump 77 tolerates fabrication in a small size because it is only required to serve the purpose of aiding in the fluidification of the oil due to the natural convection.

### Industrial Applicability:

The present invention allows a given liquid for treatment to be efficiently regenerated by distillation with high accuracy and, at the same time, fulfills improvement of the durability of apparatus and simplification of the construction of apparatus because it can preclude the possible degradation of the degree of rectification caused by an apparatus for vacuum generation as described above. It also enables a given liquid for treatment to be efficiently and safely regenerated because it can cut to a great extent the time and labor which is necessary for the discharge of the residue of distillation. It adds to the degree of rectification because it permits easy control of the temperature of heating the liquid under treatment and allows the reduced-pressure distillation of the liquid under treatment to be carried out under stable conditions proper for the liquid. As a result, it can efficiently regenerate the liquid under treatment with high accuracy. Owing to these factors, this invention can be effectively utilized for the generation of a nonaqueous solvent containing soil components.

## Claims

1. A method for reduced-pressure distillation comprising the steps of heating and vaporizing a liquid under treatment under a reduced pressure in a still, liquefying the generated vapor by condensation, and thereby effecting regeneration of said liquid, characterized by circulating the distillate resulting from said liquefaction through the medium of a liquid storage tank and, at the same time, reducing the pressure in said still to a prescribed degree by the use of an ejector inserted in the circulation system for said distillate.

2. A method for reduced-pressure distillation
comprising:
a step for reduced-pressure distillation by heating and vaporizing a liquid under treatment under a reduced pressure in a still, liquefying the produced vapor by condensation and, at the same time, allowing the residue of said heating and vaporizing treatment to remain in said still thereby effecting regeneration of said liquid under treatment; and
a step for discharge of said residue by causing said residue remaining in said still to be discharged into a liquid storage tank adjusted to the same degree of reduced pressure as in said still,
wherein said step for reduced-pressure distillation is performed immediately after said step for discharge of said residue.

3. A method for reduced-pressure distillation comprising the steps of heating and vaporizing a liquid under treatment under a reduced pressure in a still, liquefying the produced vapor by condensation, and thereby effecting regeneration of the liquid under treatment, characterized by effecting the heating of said liquid under treatment by the use of a heat-resistant oil as a heating medium.

4. The method according to any of claims 1, 2, and 3, wherein said liquid under treatment is a nonaqueous solvent containing soil components and said nonaqueous solvent is regenerated by said reduced-pressure distillation.

5. An apparatus for reduced-pressure distillation
comprising:
a still for heating and vaporizing a liquid under treatment under a reduced pressure,
a condenser for liquefying by condensation the produced vapor of said liquid; and
an ejector inserted in a circulation system for circulating the distillate resulting from said liquefaction by condensation and adapted to adjust the internal pressure of said still at a prescribed degree of reduced pressure.

6. An apparatus for reduced-pressure distillation
comprising:
a still furnished with a heating mechanism and adapted to heat and vaporize a liquid under treatment under a reduced pressure by means of said heating mechanism;
a condenser communicably connected to said still and adapted to liquefy by condensation the produced vapor of said liquid under treatment;
a circulation system for circulating the distillate resulting from said liquefaction by condensation via a water separator; and
a vacuum generating means communicably connected via said condenser to said still and having an ejector inserted in said circulation system for the distillate.

7. An apparatus for reduced-pressure distillation
comprising:
a still for heating and vaporizing a liquid under treatment under a reduced pressure;
a condenser for liquefying by condensation the produced vapor of said liquid under treatment; and
a liquid storage tank adjusted to the same degree of reduced pressure as in said still and adapted to store the residue arising from the heating and vaporizing of said liquid under treatment and remaining in said still.

8. An apparatus for reduced-pressure distillation
comprising:
a still furnished with a heating mechanism and adapted to heat and vaporize a liquid under treatment under a reduced pressure by means of said heating mechanism;
a condenser communicably connected to said still and adapted to liquefy by condensation the produced vapor of said liquid under treatment;
a vacuum generating means communicably connected to said still via said condenser; and
a liquid storage tank connected to said still through the medium of a residue discharge tube having a switching mechanism inserted therein, also connected thereto through the medium of a communicating tube so as to be adjusted to the same degree of reduced pressure as in said still, and adapted to receive into storage the residue resulting from said heating and vaporizing of said liquid under treatment through the medium of said residue discharge tube.

9. The apparatus according to claim 8, wherein said vacuum generating means is possessed of an ejector.

10. The apparatus according to claim 9, wherein said liquid under treatment is a nonaqueous solvent containing soil components and said ejector is inserted in a circulation system for circulating the distillate resulting from said liquefaction by condensation through the medium of a water separator.

11. The apparatus according to claim 8, wherein said liquid storage tank is further provided with a cooling means and adapted to cool said residue before said residue is discharged from said liquid storage tank.

12. The apparatus according to claim 8, wherein said communicating tube has inserted therein a switch mechanism capable of introducing an ambient air and said switch mechanism allows selective communication of the interior of said liquid storage tank with said still side or the ambient side.

13. The apparatus according to claim 11, which further
comprises:
a residue discharge part provided in said liquid storage tank and possessed of a switch mechanism;
a waste liquid tank for receiving into storage therein the residue cooled by said liquid storage tank;
a mounting base capable of carrying therein said waste liquid tank and movable between the position for receiving into storage the residue under the liquid storage tank and the position for extracting said waste liquid tank;
a waste liquid tank sensor for detecting the fact that said waste liquid tank is mounted on said mounting base;
a mounting base sensor for detecting the fact that said mounting base is set in place at said position for receiving into storage said residue; and
a control means for opening said switch mechanism of said residue discharge part and effecting discharge of said cooled residue into said waste liquid tank when said waste liquid tank sensor detects said waste liquid tank and, at the same time, said mounting base sensor detects the fact that said mounting base is set in place at said position for receiving into storage said residue.

14. The apparatus according to claim 13, which further
comprises:
a residue sensor disposed in said waste liquid tank and adapted to detect the amount of said residue in said waste liquid tank; and
a control means for closing said switch mechanism of said residue discharge part and stopping the discharge of said residue when said residue sensor detects a prescribed amount of said residue.

15. The apparatus according to any of claims 5, 6, 7, and 8, wherein said liquid under treatment is a nonaqueous solvent containing soil components and said nonaqueous solvent is regenerated by thermal vaporization under a reduced pressure and liquefaction by condensation.

16. An apparatus for reduced-pressure distillation
comprising:
a still furnished with a heating mechanism using a heat-resistant oil as a heating medium and adapted to for heat and vaporize a liquid under treatment under a reduced pressure by said heating mechanism;
a condenser communicably connected to said still and adapted to liquefy by condensation the vapor of said liquid under treatment; and
a vacuum generating means communicably connected to said still through the medium of said condenser.

17. The apparatus according to claim 16, wherein said heating mechanism is provided with a heat-exchange flow path possessed of at least either of a first heat-exchange flow path disposed in said still and a second heat-exchange flow path disposed so as to encircle the periphery of said still, an oil heater for heating said heat-resistant oil, and a circulation pump for circulating said heat-resistant oil heated in said oil heater through the medium of said heat-exchange flow path.

18. The apparatus according to claim 17, wherein said heating mechanism is possessed of both said first heat-exchange flow path and said second heat-exchange flow path and adapted to pass the heated heat-resistant oil sequentially through said first heat-exchange flow path and said second heat-exchange flow path in the order mentioned.

19. The apparatus according to claim 17, wherein said oil heater is provided with a plurality of severally operable heaters and also provided with an oil temperature sensor for detecting the temperature of said heated heat-resistant oil and the operating conditions of said plurality of heaters are controlled in accordance with the temperature of said heat-resistant oil detected by said oil temperature sensor.

20. The apparatus according to claim 17, wherein a liquid level adjusting device is disposed in a piping system for supplying said liquid under treatment to said still and said liquid level adjusting device is operated so as to set said heat-exchange flow path in place below the liquid level of said liquid under treatment stored in said still.

21. The apparatus according to claim 16, wherein said heating mechanism is provided with a heating tank disposed so as to encircle the periphery of said still and filled with said heat-resistant oil and said heating tank is provided with an oil circulation rectifying plate erected inside said heating tank so as to encircle said still, an oil passing flow path disposed in the lower part of said oil circulation rectifying plate, and a heater disposed inside said oil circulation rectifying plate and used to heat said heat-resistant oil.

22. The apparatus according to claim 21, wherein said heating tank is provided with a circulating pipe for communicably interconnecting the upper part and the bottom part thereof and a circulation pump inserted into said circulation pipe and adapted to circulate said heat-resistant oil from the upper part side to the bottom part side thereof through the medium of said circulation pipe.

23. The apparatus according to claim 21, wherein said heating tank is provided with a plurality of severally operable heaters and also provided with an oil temperature sensor for detecting the temperature of said heated heat-resistant oil and the operating conditions of said plurality of heaters are controlled in accordance with the temperature of said heat-resistant oil detected by said oil temperature sensor.

24. The apparatus according to claim 21, wherein a liquid level adjusting device is disposed in a piping system for supplying said liquid under treatment to said still and said liquid level adjusting device is operated so as to set said heating tank in place below the liquid level of said liquid under treatment stored in said still.

25. The apparatus according to claim 16, wherein said liquid under treatment is a nonaqueous solvent containing soil components and said nonaqueous solvent is regenerated by thermal vaporization under a reduced pressure and liquefaction by condensation.
